# EUROPÄISCHE PATENTSCHRIFT

(11) **EP 3 994 365 B1**
(45) Veröffentlichungstag und Bekanntmachung des Hinweises auf die Patenterteilung: **15.03.2023**
(21) Anmeldenummer: 20734008.4
(22) Anmeldetag: 22.06.2020
(51) Int. Cl.: F16B 25/00, F16B 25/10, F16B 35/06

(54) **TROCKENBAUSCHRAUBE**
DRYWALL SCREW
VIS DE CONSTRUCTION SÈCHE

(30) Priorität: 03.07.2019 EP 19184079
(43) Veröffentlichungstag der Anmeldung: 11.05.2022
(73) Patentinhaber: Hilti Aktiengesellschaft, 9494 Schaan (LI)
(72) Erfinder: HAAG, Stefan, 9470 Buchs (CH)
(74) Vertreter: Hilti Aktiengesellschaft Corporate Intellectual Property
(86) Internationale Anmeldenummer: PCT/EP2020/067307
(87) Internationale Veröffentlichungsnummer: WO 2021/001192

(56) Entgegenhaltungen:
- EP-A1- 0 514 916
- DE-A1- 2 324 675
- DE-U1- 9 317 008

## Beschreibung

### Technisches Gebiet

Die Erfindung betrifft eine Trockenbauschraube zur Befestigung einer Gipskartonplatte an einem Metallträger.

### Stand der Technik

Derartige Trockenbauschrauben weisen häufig einen Kopf, einen Spitzenabschnitt und einen länglichen Schaft auf, wobei der Schaft in seiner Längsrichtung eine Achse definiert und sich entlang der Achse vom Kopf bis zum Spitzenabschnitt erstreckt. Bekannte Trockenbauschrauben erzeugen in der Gipskartonplatte jeweils ein erstes Bohrloch, wenn die Trockenbauschraube in Richtung der Achse durch die Gipskartonplatte getrieben wird. Üblicherweise wird die Trockenbauschraube so weit durch die Gipskartonplatte getrieben, dass die der Kopf nicht über eine ebene Oberfläche der Gipskartonplatte hervorsteht. Der Kopf verdrängt dabei ein gewisses Volumen der Gipskartonplatte, so dass die Gefahr besteht, dass sich die Oberfläche der Gipskartonplatte aufwölbt, was den optischen Eindruck einer glatten und ebenen Oberfläche beeinträchtigt.

Aus der DE 93 17 008 U1 ist eine Schraube zur Verbindung einer Schalplatte bekannt.

### Darstellung der Erfindung

Aufgabe der Erfindung ist es, eine Trockenbauschraube zur Verfügung zu stellen, bei der die Gefahr einer Wölbung der Oberfläche der Gipskartonplatte reduziert wird.

Die Aufgabe wird gelöst durch eine Trockenbauschraube zur Befestigung einer Gipskartonplatte an einem Metallträger, mit einem Kopf, einem Spitzenabschnitt und einem länglichen Schaft, wobei der Schaft in seiner Längsrichtung eine Achse definiert und sich entlang der Achse vom Kopf bis zum Spitzenabschnitt erstreckt, wobei der Spitzenabschnitt sich an den Schaft anschliesst und dafür geeignet ist, in der Gipskartonplatte ein erstes Bohrloch und in dem Metallträger ein zweites Bohrloch zu erzeugen, wenn die Trockenbauschraube in Richtung der Achse durch die Gipskartonplatte getrieben wird, wobei die Trockenbauschraube ein Aufweitelement aufweist, welches dafür geeignet ist, das erste Bohrloch in der Gipskartonplatte bis zu einem ersten Bohrlochdurchmesser t aufzuweiten und bei einem Auftreffen auf den Metallträger abzubrechen, wobei der Kopf den ersten Bohrlochdurchmesser t mit einem Einpressvolumen V₁ überschreitet, wobei der Schaft einen mit einem Gewinde versehenen Gewindeabschnitt und einen entlang der Achse zwischen dem Gewindeabschnitt und dem Kopf angeordneten, gewindefreien Unterkopfabschnitt aufweist, welcher den ersten Bohrlochdurchmesser t mit einem Aufnahmevolumen V₂ unterschreitet, welches mindestens 80% des Einpressvolumens V₁ beträgt. Bevorzugt beträgt das Aufnahmevolumen V₂ mindestens 100% des Einpressvolumens V₁. Dadurch kann der gewindefreie Unterkopfabschnitt ein von dem Kopf verdrängtes Material der Gipskartonplatte aufnehmen, so dass die Gefahr der Wölbung der Oberfläche der Gipskartonplatte reduziert ist.

Eine vorteilhafte Ausführungsform ist dadurch gekennzeichnet, dass das Aufweitelement einen oder mehrere Vorsprünge umfasst. Bevorzugt sind die mehreren Vorsprünge gleichmässig auf einem Umfang der Trockenbauschraube verteilt. Ebenfalls bevorzugt sind der oder die Vorsprünge flügelförmig ausgebildet.

Eine vorteilhafte Ausführungsform ist dadurch gekennzeichnet, dass das Aufweitelement an dem Gewindeabschnitt angeordnet ist. Bevorzugt wird das Gewinde von dem Aufweitelement unterbrochen.

Eine vorteilhafte Ausführungsform ist dadurch gekennzeichnet, dass das Aufweitelement an dem Spitzenabschnitt angeordnet ist.

Eine vorteilhafte Ausführungsform ist dadurch gekennzeichnet, dass sich das Gewinde des Gewindeabschnitts in dem Spitzenabschnitt fortsetzt.

Eine vorteilhafte Ausführungsform ist dadurch gekennzeichnet, dass das Gewinde des Gewindeabschnitts geeignet ist, in das zweite Bohrloch in dem Metallträger ein Gegengewinde zu formen.

Eine vorteilhafte Ausführungsform ist dadurch gekennzeichnet, dass das Gewinde des Gewindeabschnitts einen Aussendurchmesser d₁ aufweist, welcher höchstens 120% des ersten Bohrlochdurchmessers beträgt. Bevorzugt beträgt der Aussendurchmesser d₁ höchstens 100% des ersten Bohrlochdurchmessers t.

Eine vorteilhafte Ausführungsform ist dadurch gekennzeichnet, dass der Kopf ein Schneidelement zum Zerschneiden einer Kartonageeinfassung der Gipskartonplatte aufweist. Bevorzugt ist das Schneidelement an einer dem Spitzenabschnitt zugewandten Unterseite des Kopfes angeordnet. Ebenfalls bevorzugt umfasst das Schneidelement eine oder mehrere sägezahnförmige erste Schneidkanten, welche besonders bevorzugt gleichmässig auf einem Umfang der Trockenbauschraube verteilt angeordnet sind. Ebenfalls bevorzugt umfasst das Schneidelement eine oder mehrere spiralförmige zweite Schneidkanten, welche besonders bevorzugt gleichmässig auf dem Umfang der Trockenbauschraube verteilt angeordnet sind. Besonders bevorzugt sind die eine oder mehreren zweiten Schneidkanten gegensinnig zu dem Gewinde des Gewindeabschnitts orientiert.

### Ausführungsbeispiele

Die Erfindung wird nachstehend anhand von Ausführungsbeispielen unter Bezugnahme auf die Zeichnungen näher erläutert. Es zeigen:
Fig. 1 eine Trockenbauschraube in einer Seitenansicht und
Fig. 2 einen Kopf einer Trockenbauschraube in einer Seitenansicht.

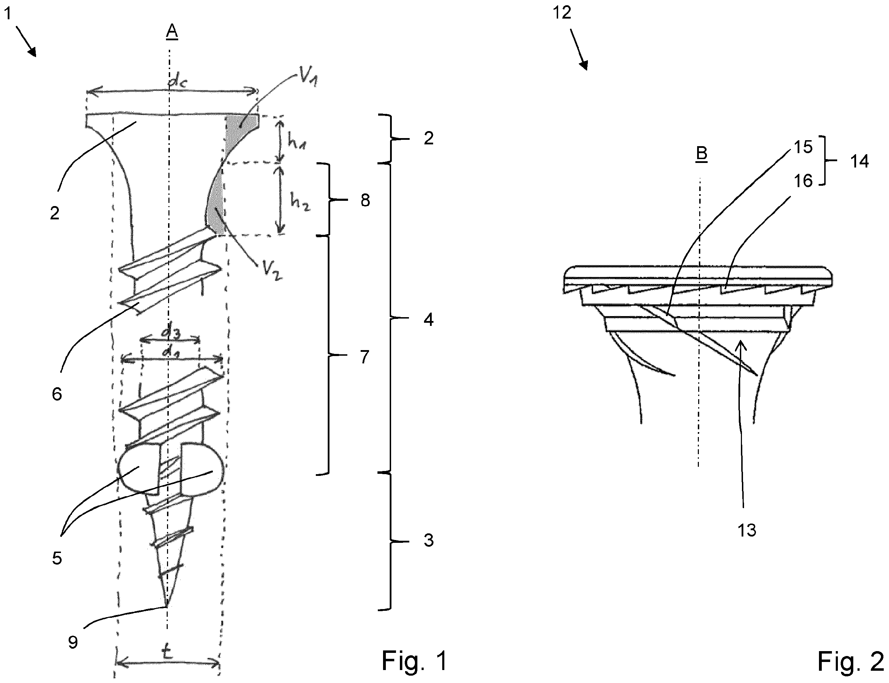

In Fig. 1 ist eine Trockenbauschraube 1 zur Befestigung einer nicht gezeigten Gipskartonplatte an einem ebenfalls nicht gezeigten Metallträger dargestellt. Die Trockenbauschraube umfasst einen Kopf 2, einen eine Spitze 9 aufweisenden Spitzenabschnitt 3 und einen länglichen Schaft 4. Der Schaft 4 weist einen Schaftdurchmesser d₃ auf, definiert in seiner Längsrichtung eine Achse A und erstreckt sich entlang der Achse A vom Kopf bis zum Spitzenabschnitt 3, welcher sich an den Schaft 4 anschliesst. Der Spitzenabschnitt 3 ist dafür geeignet, in der Gipskartonplatte ein erstes Bohrloch und in dem Metallträger ein zweites Bohrloch zu erzeugen, wenn die Trockenbauschraube 1 in Richtung der Achse A durch die Gipskartonplatte getrieben wird. Die Trockenbauschraube 1 weist weiterhin ein Aufweitelement 5 auf, welches zwei bezüglich der Achse A einander gegenüberliegende, flügelförmige Vorsprünge umfasst und dafür geeignet ist, das erste Bohrloch in der Gipskartonplatte bis zu einem von einer bezüglich der Achse A radialen Ausdehnung des Aufweitelements 5 vorgegebenen ersten Bohrlochdurchmesser t aufzuweiten. Bei einem Auftreffen auf den Metallträger bricht das Aufweitelement 5 dagegen ab.

Der Kopf 2 hat einen Durchmesser d_{c} und überschreitet den ersten Bohrlochdurchmesser t mit einem bezüglich der Achse A symmetrischen, also ringförmigen Einpressvolumen V₁, von dem in Fig. 1 lediglich eine Querschnittsfläche zu sehen ist. In Richtung der Achse A weist der Kopf 2 eine Höhe h₁ auf. Der Schaft 4 weist einen mit einem Gewinde 6 versehenen Gewindeabschnitt 7 und einen entlang der Achse A zwischen dem Gewindeabschnitt 7 und dem Kopf 2 angeordneten, gewindefreien Unterkopfabschnitt 8 auf. Der Unterkopfabschnitt 8 unterschreitet den Bohrlochdurchmesser t mit einem Aufnahmevolumen V₂, von dem ebenfalls in Fig. 1 lediglich eine Querschnittsfläche zu sehen ist. In Richtung der Achse A weist der Unterkopfabschnitt 8 eine Höhe h₂ auf. Das Aufnahmevolumen V₂ beträgt beispielsweise 110% des Einpressvolumens V₁. Dadurch kann der gewindefreie Unterkopfabschnitt 8 ein von dem Kopf 2 verdrängtes Material der Gipskartonplatte aufnehmen. Bei nicht gezeigten Ausführungsbeispielen beträgt das Aufnahmevolumen V₂ weniger als 100% des Einpressvolumens V₁. Dadurch, dass sich das verdrängte Material der Gipskartonplatte bis zu einem gewissen Grad zusammenpressen lässt, kann der Unterkopfabschnitt das Material unter Umständen dennoch aufnehmen.

Das Aufweitelement 5 ist an einem Übergang von dem Schaft 4 zu dem Spitzenabschnitt 3 und somit an dem Gewindeabschnitt 7 des Schafts 4 und an dem Spitzenabschnitt 3 angeordnet. Das Gewinde 6 setzt sich in dem Spitzenabschnitt 3 fort, wird lediglich von dem Aufweitelement 5 unterbrochen und erstreckt sich bevorzugt bis zu der Spitze 9. Das Gewinde 6 ist als selbstformendes, insbesondere selbstfurchendes Gewinde ausgebildet und daher geeignet, in das zweite Bohrloch in dem Metallträger ein Gegengewinde zu formen. Das Gewinde 6 des Gewindeabschnitts 7 weist einen Aussendurchmesser d₁ auf, welcher etwa 90% des ersten Bohrlochdurchmessers t beträgt. Am Gewindegrund des Gewindes 6 weist der Gewindeabschnitt 7 den Schaftdurchmesser d₃ auf. Der erste Bohrlochdurchmesser t ist bevorzugt grösser als der Schaftdurchmesser d₃. Bei nicht gezeigten Ausführungsbeispielen beträgt der Aussendurchmesser d₁ mehr als 100% des ersten Bohrlochdurchmessers t. Das Gewinde schneidet dann unter Umständen ein Gegengewinde in das Material der Gipskartonplatte, was aber nicht weiter stört.

In Fig. 2 ist ein Kopf 12 einer nicht weiter gezeigten Trockenbauschraube in einer Seitenansicht dargestellt. Die Trockenbauschraube weist einen nicht gezeigten Spitzenabschnitt mit einer Spitze auf, welcher sich in Fig. 2 unterhalb des Kopfes 12 befindet. Auf einer dem Spitzenabschnitt zugewandten Unterseite 13 des Kopfes 12 ist ein Schneidelement 14 zum Zerschneiden einer Kartonageeinfassung der Gipskartonplatte angeordnet. Das Schneidelement 14 umfasst mehrere sägezahnförmige erste Schneidkanten 15, welche gleichmässig auf einem Umfang der Trockenbauschraube verteilt angeordnet sind und in Richtung der Achse B von dem Umfang der Trockenbauschraube abragen. Weiterhin umfasst das Schneidelement 14 mehrere spiralförmige zweite Schneidkanten 16, welche ebenfalls gleichmässig auf dem Umfang der Trockenbauschraube verteilt angeordnet und gegensinnig zu einem Gewinde eines Gewindeabschnitts der Trockenbauschraube orientiert sind.

Die Merkmale der beschriebenen Ausführungsformen sind beliebig miteinander innerhalb einer einzigen Trockenbauschraube kombinierbar. Es wird darauf hingewiesen, dass die erfindungsgemässe Vorrichtung auch für andere Zwecke geeignet ist.

## Patentansprüche

1. Trockenbauschraube (1) zur Befestigung einer Gipskartonplatte an einem Metallträger, mit einem Kopf (2), einem Spitzenabschnitt (3) und einem länglichen Schaft (4), wobei der Schaft (4) in seiner Längsrichtung eine Achse definiert und sich entlang der Achse vom Kopf (2) bis zum Spitzenabschnitt (3) erstreckt, wobei der Spitzenabschnitt (3) sich an den Schaft (4) anschliesst und dafür geeignet ist, in der Gipskartonplatte ein erstes Bohrloch und in dem Metallträger ein zweites Bohrloch zu erzeugen, wenn die Trockenbauschraube in Richtung der Achse durch die Gipskartonplatte getrieben wird, wobei die Trockenbauschraube ein Aufweitelement (5) aufweist, welches dafür geeignet ist, das erste Bohrloch in der Gipskartonplatte bis zu einem ersten Bohrlochdurchmesser t aufzuweiten und bei einem Auftreffen auf den Metallträger abzubrechen, wobei der Kopf (2) den ersten Bohrlochdurchmesser t mit einem Einpressvolumen V₁ überschreitet, wobei der Schaft (4) einen mit einem Gewinde (6) versehenen Gewindeabschnitt (7) aufweist, **dadurch gekennzeichnet, dass** der Schaft (4) einen entlang der Achse zwischen dem Gewindeabschnitt (7) und dem Kopf (2) angeordneten, gewindefreien Unterkopfabschnitt (8) aufweist, welcher den ersten Bohrlochdurchmesser t mit einem Aufnahmevolumen V₂ unterschreitet, welches mindestens 80% des Einpressvolumens V₁ beträgt.

2. Trockenbauschraube nach Anspruch 1, wobei das Aufnahmevolumen V₂ mindestens 100% des Einpressvolumens V₁ beträgt.

3. Trockenbauschraube nach einem der vorhergehenden Ansprüche, wobei das Aufweitelement (5) einen oder mehrere insbesondere gleichmässig auf einem Umfang der Trockenbauschraube verteilte Vorsprünge umfasst.

4. Trockenbauschraube nach Anspruch 3, wobei der oder die Vorsprünge flügelförmig ausgebildet sind.

5. Trockenbauschraube nach einem der vorhergehenden Ansprüche, wobei das Aufweitelement (5) an dem Gewindeabschnitt (7) angeordnet ist.

6. Trockenbauschraube nach einem der vorhergehenden Ansprüche, wobei das Gewinde (6) von dem Aufweitelement (5) unterbrochen wird.

7. Trockenbauschraube nach einem der vorhergehenden Ansprüche, wobei das Aufweitelement (5) an dem Spitzenabschnitt (3) angeordnet ist.

8. Trockenbauschraube nach einem der vorhergehenden Ansprüche, wobei sich das Gewinde (6) des Gewindeabschnitts (7) in dem Spitzenabschnitt (3) fortsetzt.

9. Trockenbauschraube nach einem der vorhergehenden Ansprüche, wobei das Gewinde (6) des Gewindeabschnitts (7) geeignet ist, in das zweite Bohrloch in dem Metallträger ein Gegengewinde zu formen.

10. Trockenbauschraube nach einem der vorhergehenden Ansprüche, wobei das Gewinde (6) des Gewindeabschnitts (7) einen Aussendurchmesser d₁ aufweist, welcher höchstens 120%, insbesondere höchstens 100% des ersten Bohrlochdurchmessers t beträgt.

11. Trockenbauschraube nach einem der vorhergehenden Ansprüche, wobei der Kopf (2) ein Schneidelement (14) zum Zerschneiden einer Kartonageeinfassung der Gipskartonplatte aufweist.

12. Trockenbauschraube nach Anspruch 11, wobei das Schneidelement (14) an einer dem Spitzenabschnitt (3) zugewandten Unterseite des Kopfes (2) angeordnet ist.

13. Trockenbauschraube nach einem der Ansprüche 11 bis 12, wobei das Schneidelement (14) eine oder mehrere sägezahnförmige, insbesondere gleichmässig auf einem Umfang der Trockenbauschraube verteilte erste Schneidkanten (15) umfasst.

14. Trockenbauschraube nach einem der Ansprüche 11 bis 13, wobei das Schneidelement (14) eine oder mehrere spiralförmige, insbesondere gleichmässig auf einem Umfang der Trockenbauschraube verteilte zweite Schneidkanten (16) umfasst.

15. Trockenbauschraube nach Anspruch 14 wobei die eine oder mehreren zweiten Schneidkanten (16) gegensinnig zu dem Gewinde (6) des Gewindeabschnitts (7) orientiert sind.

## Claims

1. Drywall screw (1) for fastening a plasterboard panel to a metal support, having a head (2), a tip portion (3) and an elongate shank (4), wherein the shank (4) defines an axis in its longitudinal direction and extends along the axis from the head (2) to the tip portion (3), wherein the tip portion (3) adjoins the shank (4) and is suitable for producing a first borehole in the plasterboard panel and a second borehole in the metal support when the drywall screw is driven through the plasterboard panel in the direction of the axis, wherein the drywall screw has a widening element (5) which is suitable for widening the first borehole in the plasterboard panel to a first borehole diameter t and breaking off upon impinging on the metal support, wherein the head (2) is larger than the first borehole diameter t with a pressing-in volume V₁, wherein the shank (4) has a threaded portion (7) provided with a thread (6), **characterized in that** the shank (4) has a thread-free underhead portion (8) which is arranged along the axis between the threaded portion (7) and the head (2) and which is smaller than the first borehole diameter t with a receiving volume V₂ which is at least 80% of the pressing-in volume V₁.

2. Drywall screw according to Claim 1, wherein the receiving volume V₂ is at least 100% of the pressing-in volume V₁.

3. Drywall screw according to either of the preceding claims, wherein the widening element (5) has one or more projections distributed in particular uniformly over a circumference of the drywall screw.

4. Drywall screw according to Claim 3, wherein the projection(s) is or are wing-shaped.

5. Drywall screw according to any of the preceding claims, wherein the widening element (5) is arranged on the threaded portion (7).

6. Drywall screw according to any of the preceding claims, wherein the thread (6) is interrupted by the widening element (5).

7. Drywall screw according to any of the preceding claims, wherein the widening element (5) is arranged on the tip portion (3).

8. Drywall screw according to any of the preceding claims, wherein the thread (6) of the threaded portion (7) continues in the tip portion (3).

9. Drywall screw according to any of the preceding claims, wherein the thread (6) of the threaded portion (7) is suitable for forming a mating thread into the second borehole in the metal support.

10. Drywall screw according to any of the preceding claims, wherein the thread (6) of the threaded portion (7) has an outside diameter d₁ which is at most 120%, in particular at most 100%, of the first borehole diameter t.

11. Drywall screw according to any of the preceding claims, wherein the head (2) has a cutting element (14) for cutting a cardboard lining of the plasterboard panel.

12. Drywall screw according to Claim 11, wherein the cutting element (14) is arranged on an underside, facing the tip portion (3), of the head (2).

13. Drywall screw according to either of Claims 11 and 12, wherein the cutting element (14) comprises one or more sawtooth-shaped first cutting edges (15) distributed in particular uniformly over a circumference of the drywall screw.

14. Drywall screw according to any of Claims 11 to 13, wherein the cutting element (14) comprises one or more spiral second cutting edges (16) distributed in particular uniformly over a circumference of the drywall screw.

15. Drywall screw according to Claim 14, wherein the one or more second cutting edges (16) are oriented oppositely to the thread (6) of the threaded portion (7).

## Revendications

1. Vis de construction sèche (1) servant à la fixation d'une plaque de placoplâtre à un support métallique, avec une tête (2), une section de pointe (3) et une tige allongée (4), la tige (4) définissant dans sa direction longitudinale un axe et s'étendant le long de l'axe depuis la tête (2) jusqu'à la section de pointe (3), la section de pointe (3) étant raccordée au niveau de la tige (4) et adaptée pour produire dans la plaque de placoplâtre un premier trou foré et pour produire dans le support métallique un deuxième trou foré lorsque la vis de construction sèche est entraînée dans la direction de l'axe à travers la plaque de placoplâtre, la vis de construction sèche comportant un élément élargisseur (5) adapté pour élargir le premier trou foré réalisé dans la plaque de placoplâtre jusqu'à un premier diamètre de trou foré t et pour s'arrêter en cas d'arrivée sur le support métallique, la tête (2) dépassant le premier diamètre de trou foré t avec un volume de compactage V₁, la tige (4) comportant une section filetée (7) pourvue d'un filet (6), **caractérisée en ce que** la tige (4) présente un section sous-tête (8) sans filet disposée le long de l'axe entre la section filetée (7) et la tête (2) qui passe en-dessous du premier diamètre de trou foré t avec un volume de logement V₂ d'au moins 80 % du volume de compactage V₁.

2. Vis de construction sèche selon la revendication 1, dans laquelle le volume de logement V₂ constitue au moins 100 % du volume de compactage V₁.

3. Vis de construction sèche selon l'une quelconque des revendications précédentes, dans laquelle l'élément élargisseur (5) comprend une ou plusieurs saillies notamment réparties de façon régulière sur un périmètre de la vis de construction sèche.

4. Vis de construction sèche selon la revendication 3, dans laquelle la ou les saillies sont réalisées en forme d'aile.

5. Vis de construction sèche selon l'une quelconque des revendications précédentes, dans laquelle l'élément élargisseur (5) est disposé au niveau de la section filetée (7).

6. Vis de construction sèche selon l'une quelconque des revendications précédentes, dans laquelle le filet (6) est interrompu par l'élément élargisseur (5).

7. Vis de construction sèche selon l'une quelconque des revendications précédentes, dans laquelle l'élément élargisseur (5) est disposé au niveau de la section de pointe (3).

8. Vis de construction sèche selon l'une quelconque des revendications précédentes, dans laquelle le filet (6) de la section filetée (7) se poursuit dans la section de pointe (3).

9. Vis de construction sèche selon l'une quelconque des revendications précédentes, dans laquelle le filet (6) de la section filetée (7) est adapté pour former un contre-filet dans le deuxième trou foré réalisé dans le support métallique.

10. Vis de construction sèche selon l'une quelconque des revendications précédentes, le filet (6) de la section filetée (7) présentant un diamètre extérieur d₁ de tout au plus 120 %, notamment de tout au plus 100 % du premier diamètre de trou foré t.

11. Vis de construction sèche selon l'une quelconque des revendications précédentes, dans laquelle la tête (2) comporte un élément tranchant (14) permettant de découper un bord cartonné de la plaque de placoplâtre.

12. Vis de construction sèche selon la revendication 11, dans laquelle l'élément tranchant (14) est disposé au niveau du côté inférieur de la tête (2) orienté vers la section de pointe (3).

13. Vis de construction sèche selon l'une quelconque des revendications 11 à 12, dans laquelle l'élément tranchant (14) comprend une ou plusieurs premières arêtes tranchantes (15) en forme de dent de scie, notamment réparties de façon régulière sur un périmètre de la vis de construction sèche.

14. Vis de construction sèche selon l'une quelconque des revendications 11 à 13, dans laquelle l'élément tranchant (14) comprend une ou plusieurs deuxièmes arêtes tranchantes (16) en forme de spirale, notamment réparties de façon régulière sur un périmètre de la vis de construction sèche.

15. Vis de construction sèche selon la revendication 14, la ou les deuxièmes arêtes tranchantes (16) sont orientées dans le sens contraire du filet (6) de la section filetée (7).
